# EUROPÄISCHE PATENTSCHRIFT

(11) **EP 3 338 066 B1**
(45) Veröffentlichungstag und Bekanntmachung des Hinweises auf die Patenterteilung: **08.05.2019**
(21) Anmeldenummer: 16751284.7
(22) Anmeldetag: 09.08.2016
(51) Int. Cl.: G01F 23/24, B01D 36/00, F02M 37/22

(54) **WASSERSTANDSENSOREINRICHTUNG EINES KRAFTSTOFFFILTERS**
WATER LEVEL SENSOR DEVICE FOR A FUEL FILTER
DISPOSITIF CAPTEUR DE NIVEAU D'EAU D'UN FILTRE À CARBURANT

(30) Priorität: 21.08.2015 DE 202015008998 U; 07.04.2016 DE 102016205811
(43) Veröffentlichungstag der Anmeldung: 27.06.2018
(73) Patentinhaber: Mahle International GmbH, 70376 Stuttgart (DE)
(72) Erfinder: DOBERNIG, Daniel, 9130 Poggersdorf (AT); PFEIFFER, Gert, 9020 Klagenfurt (AT); SCHADLER, Werner, 8430 Seggauberg (AT); WEINBERGER, Alfred, 9413 St. Gertraud (AT); ZOTTER, Peter, 8334 Lödersdorf (AT)
(74) Vertreter: BRP Renaud & Partner mbB Rechtsanwälte Patentanwälte Steuerberater
(86) Internationale Anmeldenummer: PCT/EP2016/068977
(87) Internationale Veröffentlichungsnummer: WO 2017/032591

(56) Entgegenhaltungen:
- DE-A1- 3 801 352
- DE-C1- 4 406 200
- DE-U1-202007 018 665
- US-A- 3 666 903
- US-A- 5 626 053
- US-A- 5 915 999
- US-A1- 2006 196 264
- US-A1- 2015 021 246

## Beschreibung

Die vorliegende Erfindung betrifft eine Wasserstandsensoreinrichtung eines Kraftstofffilters. Die Erfindung betrifft außerdem einen mit einer solchen Wasserstandsensoreinrichtung ausgestatteten Kraftstofffilter.

Wasserstandsensoren werden in Kraftstofffiltern verwendet, um das kontinuierlich aus dem Kraftstoff abgeschiedene Wasser hinsichtlich seiner Menge zu erfassen und temporär abzulassen. Derartige Wasserstandsensoren werden dabei üblicherweise in Wassersammelräumen angeordnet und melden einen dort vorhandenen Wasserstand kontinuierlich oder zyklisch an eine Steuereinrichtung, welche bei Erreichen eines vordefinierten Pegels ein Signal erzeugt und beispielsweise das im Wassersammelraum gesammelte Wasser abführt.

Üblicherweise werden die hierfür eingesetzten Wasserstandsensoren als Kunststoffspritzgussteile mit elektrisch leitenden Polen ausgebildet, wobei über die elektrisch leitenden Pole und das Wasser eine elektrisch leitende Verbindung geschaffen werden kann, welche über den jeweils im Wassersammelraum vorhandenen Wasserstand informiert. Die elektrisch leitenden Pole können dabei beispielsweise in der Art von Leitungen ausgebildet sein, wobei zunehmend auch elektrisch leitende Kunststoffe Anwendung finden, die beispielsweise elektrisch leitende Fasern, wie insbesondere Kohlefasern, aufweisen.

Werden dabei Wasserstandsensoren mit einem klassischen Kunststoffspritzgussvorgang hergestellt, so erzeugt eine glatte Oberfläche in der Kunststoffspritzgussform bzw. im Spritzgusswerkzeug eine sogenannte Spritzhaut, da sich die im gespritzten Kunststoff angeordneten Fasern im Wesentlichen parallel zur Wandoberfläche der Kunststoffspritzgussform ausrichten. Die erzeugte Spritzhaut weist jedoch eine gegenüber dem restlichen Kunststoffmaterial mit dem entsprechenden Faseranteil eine isolierende Wirkung auf, da beim Spritzgussvorgang an der Oberfläche keine Fasern mehr vorhanden sind oder lediglich ein nur verringerter Faseranteil. Hierdurch wird die elektrische Leitfähigkeit an der Oberfläche des Wasserstandsensors negativ beeinträchtigt, was insbesondere bei einem elektrischen Verbinden mit einem anderen Bauteil zu Schwierigkeiten führen kann.

US5626053 und US2006/196264 offenbaren andere Beispiele von Wasserstandsensoreinrichtungen, jede mit einer Leiterplatte und einem Wasserstandsensor aus elektrisch leitfähigem Kunststoff, wobei der Wasserstandsensor über ein elektrisch leitfähiges Metallelement mit der Leiterplatte verbunden ist.

Die vorliegende Erfindung beschäftigt sich mit dem Problem, eine Wasserstandsensoreinrichtung anzugeben, die die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen aus elektrisch leitfähigem Kunststoff ausgebildeten Wasserstandsensor mittels eines darin eingepressten und scharfkantigen Metallstifts, insbesondere eines Messingstifts, elektrisch und mechanisch mit einer Leiterplatte zu verbinden, wobei die scharfkantige Ausführung des Metallelements in seinem in den elektrisch leitfähigen Kunststoff des Wasserstandsensors eindringenden Bereich zusammen mit dem Einpressen des Metallelements in den Wasserstandsensor ein Aufreißen einer Oberfläche des elektrisch leitfähigen Kunststoffs des Wasserstandsensors bewirkt und dadurch einen elektrisch leitenden Kontakt zwischen den elektrisch leitenden Fasern des Wasserstandsensors einerseits und dem Metallelement andererseits herstellt. Die erfindungsgemäße Wasserstandsensoreinrichtung eines Kraftstofffilters weist dabei den zuvor erwähnten Wasserstandsensor aus elektrisch leitfähigem Kunststoff sowie eine Leiterplatte auf. Eine derartige Leiterplatte kann beispielsweise auch eine Steuerungselektronik enthalten, die in Abhängigkeit des von dem Wasserstandsensor ermittelten Wasserstands beispielsweise einen Wasserablass betätigt. Der Wasserstandsensor ist dabei über das zuvor beschriebene Metallelement mit der Leiterplatte verbunden, wobei das Metallelement über eine Pressverbindung mit dem Wasserstandsensor verbunden ist. Das Messingelement besitzt dabei die zuvor beschriebene scharfkantige, insbesondere tannenförmig oder sägezahnartig ausgebildete, Befestigungskontur, mittels welcher es in den elektrisch leitfähigen Kunststoff des Wasserstandsensors eingepresst wird und dabei letzteren aufreißt und dadurch insbesondere eine Spritzhaut zerschneidet und einen elektrisch leitfähigen Kontakt zu den elektrisch leitfähigen Fasern des elektrisch leitfähigen Kunststoffs herstellt. Im Vergleich zu einer Verschraubung bietet das erfindungsgemäße Einpressen des Metallelements in den Wasserstandsensor nicht nur eine Zeitersparnis bei der Herstellung, sondern erfordert darüber hinaus auch einen deutlich reduzierten Platzbedarf, der bei einer Einpressverbindung beispielsweise lediglich einen Durchmesser von 2-3 mm, bei einer Schraubverbindung jedoch bereits einen Durchmesser von ca. 8 mm beträgt. Der wesentliche Vorteil ist jedoch das Aufreißen der Spritzhaut beim Einpressen des Metallelements in den Kunststoff des Wasserstandsensors, wodurch auf vergleichsweise einfache Art und Weise eine zuverlässige elektrische Verbindung zwischen dem Metallelement und dem Wasserstandsensor geschaffen werden kann, ohne dass hierfür ein größerer technischer Aufwand erforderlich wäre.

Bei einer vorteilhaften Weiterbildung der erfindungsgemäßen Lösung weist der Wasserstandsensor eine Öffnung auf, in welche das Metallelement eingepresst ist. Die Befestigungskontur des Metallelements kann dabei ohne Vorbohrung bzw. ohne Öffnung direkt in den elektrisch leitfähigen Kunststoff des Wasserstandsensors eingepresst werden, wobei alternativ auch das Vorsehen einer Öffnung im Wasserstandsensor denkbar ist, die ein geführtes Einpressen der Befestigungskontur in den Wasserstandsensor ermöglicht. Ein Innendurchmesser der Öffnung, egal ob gespritzt oder gebohrt, ist dabei geringfügig kleiner als ein Außendurchmesser der Befestigungskontur, so dass bei einem Einpressen der Befestigungskontur des Metallelements in den Kunststoff des Wasserstandsensors auf jeden Fall ein Aufreißen des elektrisch leitfähigen Kunststoffs erfolgt.

Bei einer weitere vorteilhaften Ausführungsform der erfindungsgemäßen Lösung weist die Leiterplatte eine Öffnung auf, in welcher das Metallelement verpresst, verspannt, verrastet oder vernietet ist. Bereits diese nicht abschließende Aufzählung lässt erahnen, welch mannigfaltige Möglichkeiten zur Befestigung des Metallelements, insbesondere des Messingelements, an der Leiterplatte gegeben sind, wobei insbesondere ein Einpressen bzw. ein Verrasten des Metallelements in/mit der Leiterplatte eine einerseits technisch einfache und andererseits schnell herzustellende Verbindungstechnik ermöglicht.

Bei einer weiteren vorteilhaften Ausführungsform der erfindungsgemäßen Lösung weist das Metallelement einen Kragen auf, über welchen es im montierten Zustand am Wasserstandsensor und/oder an der Leiterplatte anliegt. Über einen derartigen Kragen kann eine haptische Anschlagskontur geschaffen werden, welche das Erreichen einer Montageendlage zuverlässig anzeigt. Hierdurch kann insbesondere eine Montagehilfe geschaffen werden.

Zweckmäßig ist der elektrisch leitfähige Kunststoff ein faserverstärkter Thermoplast mit mindestens 8 Gew.-%, vorzugsweise 40 Gew.-%, Kohlefasern. Durch das Vorsehen von Kohlefasern kann die elektrische Leitfähigkeit verbessert werden. Alternativ ist auch die Zugabe von Ruß möglich. Die im elektrisch leitfähigen Kunststoff vorgesehenen Kohlefasern und/oder der Ruß übernehmen dabei nicht nur die Funktion der elektrischen Leitfähigkeit, sondern steifen den Wasserstandsensor zusätzlich aus. Alternativ können natürlich auch weitere Bestandteile/Zusätze die elektrische Leitfähigkeit des Kunststoffs bewirken, wie z.B. Metallfasern, Aluminiumflocken, usw. Es ist auch denkbar, dass der Kunststoff selbst ohne weitere Zugabe elektrisch leitfähig ist, wie z.B. Poly-3-,4-ethylendioxythiophen, Polystyrol Sulfonat, usw. Selbstverständlich können zusätzlich auch andere Fasern, insbesondere Glasfasern, als Verstärkungselemente vorgesehen sein, durch welche der Wasserstandsensor weiter ausgesteift werden kann.

Bei einer weiteren vorteilhaften Ausführungsform der erfindungsgemäßen Lösung weist der elektrisch leitfähige Kunststoff ein PA66 GF22 CF8 auf und ist damit aus Polyamid 66 sowie 22 Gew.-% Glasfasern und 8 Gew.-% Kohlefasern ausgebildet. Eine alternative Ausführungsform wird durch einen elektrisch leitfähigen Kunststoff aus PA66 CF40 gebildet und besteht somit aus Polyamid 66 und 40 Gew.-% Kohlefasern oder wird durch einen elektrisch leitfähigen Kunststoff aus PA6 CF40 gebildet und besteht somit aus Polyamid 6 und 40 Gew.-% Kohlefasern.

Die vorliegende Erfindung beruht weiter auf dem allgemeinen Gedanken, eine zuvor beschriebene Wasserstandsensoreinrichtung in einem Kraftstofffilter einzusetzen. Hierdurch ist es möglich, eine besonders exakte Erfassung eines Wasserstandes, insbesondere in einem Wassersammelraum des Kraftstofffilters, vergleichsweise einfach und kostengünstig zu ermöglichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Kraftstofffilter mit einer erfindungsgemäßen Wasserstandsensoreinrichtung,
- Fig. 2: eine Schnittdarstellung durch eine erfindungsgemäße Wasserstandsensoreinrichtung,
- Fig. 3: eine Schnittdarstellung wie in Fig. 2, jedoch bei einer anderen Ausführungsform des Metallelements.

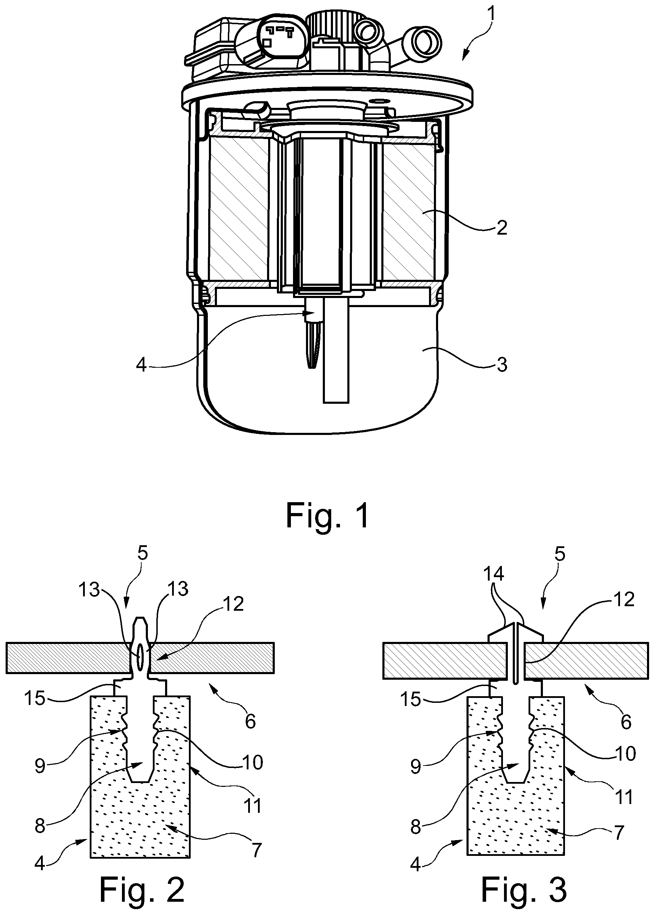

Entsprechend der Fig. 1, weist ein erfindungsgemäßes Kraftstofffilter 1 ein darin angeordnetes Ringfilterelement 2 sowie einen unterhalb des Ringfilterelements 2 angeordneten Wassersammelraum 3 auf. Der Wassersammelraum 3 dient dabei in bekannter Weise zum Sammeln des aus dem gefilterten Kraftstoff abgeschiedenen Wassers, um insbesondere eine Korrosionsgefahr in einem nachfolgend angeordneten Verbrennungsmotor reduzieren zu können. Um dabei abschätzen zu können, wann der Wassersammelraum 3 geleert werden muss, muss ein Wasserstand in diesem erfasst werden, wozu ein Wasserstandsensor 4 (vgl. auch Fig. 2) vorgesehen ist. Der Wasserstandsensor 4 wird dabei im allseits bekannten Kunststoffspritzgussverfahren hergestellt, wobei der hierfür verwendete Kunststoff 7 faserverstärkt ist und elektrisch leitende Fasern 11, wie beispielsweise Kohlefasern / Graphitfasern, aufweist. Bei bislang derartig hergestellten Wasserstandsensoren bestand jedoch oftmals das Problem, dass sich aufgrund einer glatten Innenkontur einer Kunststoffspritzgussform eine Spritzhaut bildete, in welcher ein lediglich reduzierter Anteil an Fasern 11 vorhanden war, worunter die elektrische Leitfähigkeit litt.

Der beschriebene Wasserstandsensor 4 ist dabei Bestandteil einer Wasserstandsensoreinrichtung 5 (vgl. insbesondere auch die Fig. 2 und 3), die neben dem Wasserstandsensor 4 aus leitfähigen Kunststoff 7 zusätzlich eine Leiterplatte 6 umfasst. Der Wasserstandsensor 4 ist dabei über ein Metallelement 8 mit der Leiterplatte 6 verbunden, während das Metallelement 8 über eine Pressverbindung 9 mit dem Wasserstandsensor 4 verbunden, insbesondere in diesen eingepresst ist. Besagtes Metallelement 8 kann beispielsweise als Messingelement 8' ausgebildet sein. Hierzu weist das Metallelement 8 eine scharfkantige, insbesondere eine tannenförmige oder eine sägezahnartige, und den elektrisch leitfähigen Kunststoff 7 beim Einpressen des Metallelements 8 aufreißende Befestigungskontur 10 auf. Die Befestigungskontur 10 hat dabei in erster Linie die Aufgabe, eine möglicherweise vorhandene Spritzhaut, welche ein lediglich reduzierter Anteil an Fasern 11 vorhanden war, aufzureißen und dadurch eine elektrische Kontaktierung zwischen dem Metallelement 8 einerseits und dem elektrisch leitfähigen Kunststoff 7 andererseits herzustellen.

Das Metallelement 8 kann dabei direkt in den Wasserstandsensor 4 eingepresst werden, wobei alternativ auch denkbar ist, dass zunächst eine Öffnung bzw. eine Bohrung in dem Wasserstandsensor hergestellt wird, in welche anschließend die Befestigungskontur 10 des Metallelements 8 eingepresst wird. Wird die Öffnung gebohrt, so erfolgt bereits hierdurch ein Aufreißen der elektrisch schlechter leitenden Spritzhaut. Wird die Öffnung jedoch mit gespritzt, so erfolgt ein Aufreißen der Spritzhaut erst beim Einpressen des Metallelements 8 mit seiner Befestigungskontur 10 in diese Öffnung.

Betrachtet man die Fig. 2 und 3 weiter, so kann man erkennen, dass die Leiterplatte 6 eine Öffnung 12 aufweist, in welcher das Metallelement 8 verpresst, verspannt (vgl. Fig. 2), vernietet oder verrastet (vgl. Fig. 3) ist. Bei einem Verspannen des Metallelements 8 in der Öffnung 12 der Leiterplatte 6, wie dies gemäß der Fig. 2 gezeigt ist, kann das Metallelement 8 in seinem in die Öffnung 12 eingepressten Bereich eine Radialkraft aufbringende Spannarme 13 aufweisen, über welche es sich in der Öffnung 12 verspannt und fixiert. Ist das Metallelement 8 und darüber auch der Wasserstandsensor 4 über eine Rastverbindung mit der Leiterplatte 6 verbunden, wie dies beispielsweise gemäß der Fig. 3 dargestellt ist, so weist das Metallelement 8 Rastarme 14 auf, über welche es in der Öffnung 12 verrastet ist bzw. diese hintergreift.

Betrachtet man die Fig. 2 und 3 weiter, so kann man erkennen, dass das Metallelement 8 einen Kragen 15 aufweist, über welchen es in montiertem Zustand am Wasserstandsensor 4 und/oder an der Leiterplatte 6 anliegt.

Als elektrisch leitfähiger Kunststoff 7 kann beispielsweise ein faserverstärkter Thermoplast mit zumindest 8 Gew.-% Kohlefasern 11 eingesetzt werden. Die Kohlenfasern bewirken dabei nicht nur die elektrische Leitfähigkeit, sondern steifen des Wasserstandsensor 4 zusätzlich aus. Selbstverständlich können auch weitere aussteifende Fasern 11, wie beispielsweise Glasfasern, als Verstärkungselement in dem elektrisch leitfähigen Kunststoff eingebettet sein. Ein besonders bevorzugter elektrisch leitfähiger Kunststoff 7 für die Anwendung bei dem erfindungsgemäßen Wasserstandsensor 4 ist beispielsweise ein PA6 CF40 mit Polyamid 6, 40 Gew.-% Kohlefasern. Durch einen höheren Kohlefaseranteil und/oder Rußanteil kann eine verbesserte Oberflächenleitfähigkeit hergestellt werden. Der Erhöhung des Kohlefaseranteils bis auf 40 Gew.-%, erhöht die Wahrscheinlichkeit von ununterbrochenen Leitbahnen durch den Kunststoff 7 deutlich. Das heißt die Leitfähigkeit nimmt zu (Widerstand ab). Der hohe Anteil an Fasern 11 des Kunststoffes 7 garantiert darüber hinaus hervorragende Festigkeitswerte. Damit eignet sich das Material für Kunststoffgehäuse. Gleichzeitig kann dieser Kunststoff 7 hervorragend ESD Spannungen abführen, wenn er als Gehäusewerkstoff verwendet wird. Im Kontakt mit Kraftstoffen und Wasser in Verbindung mit Gleichstrom von der Messelektronik verhält sich der Werkstoff im Gegensatz zu Metallen inert, was ebenfalls einen erheblichen Vorteil darstellt.

Selbstverständlich kann der erfindungsgemäße Wasserstandsensor 4 auch separat zum Kraftstofffilter 1 angeboten werden, beispielsweise als Ersatz- und/oder Nachrüstteil.

Mit der erfindungsgemäßen Wasserstandsensoreinrichtung 5 ist es erstmals möglich, den elektrisch leitfähigen und gespritzten Kunststoff 7 zuverlässig elektrisch mit einer Leiterplatte 6 zu kontaktieren, nämlich über besagtes Metallelement 8, insbesondere das Messingelement 8', welches generell rein theoretisch auch aus Kupfer oder einem anderen gut elektrisch leitenden, metallischen Werkstoff ausgebildet sein kann, da es bei einem Einpressen der scharfkantigen Befestigungskontur 10 des Metallelements 8 auf jeden Fall zu einem Aufreißen der die elektrische Leitfähigkeit mindernden Spritzhaut kommt und dadurch eine verbesserte elektrische Verbindung hergestellt werden kann.

## Patentansprüche

1. Wasserstandsensoreinrichtung (5) für einen Kraftstofffilter (1),
- mit einer Leiterplatte (6) und einem Wasserstandsensor (4) aus elektrisch leitfähigem Kunststoff (7),
- wobei der Wasserstandsensor (4) über ein elektrisch leitfähiges Metallelement (8), insbesondere ein Messingelement (8'), mit der Leiterplatte (6) verbunden ist und
**dadurch gekennzeichnet,**
- **dass** das Metallelement (8), insbesondere das Messingelement (8'), über eine Pressverbindung (9) mit dem Wasserstandsensor (4) verbunden ist, und
- **dass** das Metallelement (8) eine scharfkantige, insbesondere eine tannenförmige oder sägezahnartige, den Kunststoff (7) beim Einpressen des Metallelements (8) aufreißende Befestigungskontur (10) aufweist.

2. Wasserstandsensoreinrichtung nach Anspruch 1,
**dadurch gekennzeichnet,**
**dass** der Wasserstandsensor (4) eine Öffnung aufweist, in welche das Metallelement (8) eingepresst ist.

3. Wasserstandsensoreinrichtung nach einem der vorhergehenden Ansprüche,
**dadurch gekennzeichnet,**
**dass** die Leiterplatte (6) eine Öffnung (12) aufweist, in welcher das Metallelement (8) verpresst, verspannt oder vernietet ist.

4. Wasserstandsensoreinrichtung nach Anspruch 3,
**dadurch gekennzeichnet,**
- **dass** das Metallelement (8) in seinem in die Öffnung (12) eingepressten Bereich eine Radialkraft aufbringende Spannarme (13) aufweist, über welche es sich in der Öffnung (12) verspannt, oder
- **dass** das Metallelement (8) Rastarme (14) aufweist, über welche es in der Öffnung (12) verrastet ist.

5. Wasserstandsensoreinrichtung nach einem der vorhergehenden Ansprüche,
**dadurch gekennzeichnet,**
**dass** das Metallelement (8) einen Kragen (15) aufweist, über welchen es in montiertem Zustand am Wasserstandsensor (4) und/oder an der Leiterplatte (6) anliegt.

6. Wasserstandsensoreinrichtung nach einem der vorhergehenden Ansprüche,
**dadurch gekennzeichnet,**
**dass** der elektrisch leitfähige Kunststoff (7) ein faserverstärkter Thermoplast Kohlefasern, insbesondere mit zumindest 8 Gew.-%, vorzugsweise ca. 40 Gew.-%, Kohlefasern ist.

7. Wasserstandsensoreinrichtung nach einem der vorhergehenden Ansprüche,
**dadurch gekennzeichnet,**
**dass** der elektrisch leitfähige Kunststoff (7) Glasfasern als Verstärkungselemente aufweist.

8. Wasserstandsensoreinrichtung nach einem der vorhergehenden Ansprüche,
**dadurch gekennzeichnet,**
- **dass** der elektrisch leitfähige Kunststoff (7) ein PA66 GF22 CF8 ist und Polyamid 66 mit 22 Gew.-% Glasfasern und 8 Gew.-% Kohlefasern aufweist, oder
- **dass** der elektrisch leitfähige Kunststoff (7) ein PA66 CF40 ist und Polyamid 66 mit 40-Gew.-% Kohlefasern aufweist.

9. Kraftstofffilter (1) mit einer Wasserstandsensoreinrichtung (5) nach einem der vorhergehenden Ansprüche.

## Claims

1. A water level sensor device (5) for a fuel filter (1),
- with a printed circuit board (6) and a water level sensor (4) made of electrically conductive plastic (7),
- wherein the water level sensor (4) is connected to the printed circuit board (6) via an electrically conductive metal element (8), in particular a brass element (8') and
**characterized in that**
- the metal element (8), in particular the brass element (8') is connected to the water level sensor (4) via a press-fit assembly (9), und
- the metal element (8) has a sharp-edged, in particular pinetree-shaped or sawtooth-like fastening contour (10), tearing open the plastic (7) on pressing in of the metal element (8).

2. The water level sensor device according to Claim 1,
**characterized in that**
the water level sensor (4) has an opening into which the metal element (8) is pressed in.

3. The water level sensor device according to one of the preceding claims,
**characterized in that**
the printed circuit board (6) has an opening (12), in which the metal element (8) is pressed, braced or riveted.

4. The water level sensor device according to Claim 3,
**characterized in that**
- the metal element (8) has tensioning arms (13) applying a radial force in its region which is pressed into the opening (12), via which tensioning arms it braces itself in the opening (12), or
- the metal element (8) has detent arms, via which it is locked in the opening (12).

5. The water level sensor device according to one of the preceding claims,
**characterized in that**
the metal element (8) has a collar (15), via which, in the assembled state, it lies against the water level sensor (4) and/or against the printed circuit board (6).

6. The water level sensor device according to one of the preceding claims,
**characterized in that**
the electrically conductive plastic (7) is a fibre-reinforced thermoplast with carbon fibres, in particular with at least 8% by weight, preferably approximately 40% by weight, carbon fibres.

7. The water level sensor device according to one of the preceding claims,
**characterized in that**
the electrically conductive plastic (7) has glass fibres as reinforcement elements.

8. The water level sensor device according to one of the preceding claims,
**characterized in that**
- the electrically conductive plastic (7) is a PA66 GF22 CF8 and has polyamide 66 with 22% by weight glass fibres and 8% by weight carbon fibres, or
- the electrically conductive plastic (7) is a PA66 CF40 and has polyamide 66 with 40% by weight carbon fibres.

9. A fuel filter (1) with a water level sensor device (5) according to one of the preceding claims.

## Revendications

1. Dispositif de capteur de niveau d'eau (5) pour un filtre à carburant (1),
- avec une carte de circuit imprimé (6) et un capteur de niveau d'eau (4) en une matière plastique (7) électroconductrice,
- dans lequel le capteur de niveau d'eau (4) est raccordé à la carte de circuit imprimé (6) par le biais d'un élément métallique électroconducteur (8), en particulier un élément en laiton (8'), et **caractérisé en ce**
- **que** l'élément métallique (8), en particulier l'élément en laiton (8'), est raccordé par le biais d'une liaison de pressage (9) au capteur de niveau d'eau (4), et
- **que** l'élément métallique (8) présente un contour de fixation (10) à arêtes vives, en particulier en forme de sapin ou de dent de scie, déchirant la matière plastique (7) lors de l'enfoncement de l'élément métallique (8).

2. Dispositif de capteur de niveau d'eau selon la revendication 1,
**caractérisé en ce**
**que** le capteur de niveau d'eau (4) présente une ouverture dans laquelle l'élément métallique (8) est enfoncé.

3. Dispositif de capteur de niveau d'eau selon l'une quelconque des revendications précédentes,
**caractérisé en ce**
**que** la carte de circuit imprimé (6) présente une ouverture (12) dans laquelle l'élément métallique (8) est pressé, serré ou riveté.

4. Dispositif de capteur de niveau d'eau selon la revendication 3,
**caractérisé en ce**
- **que** l'élément métallique (8) présente dans sa zone enfoncée dans l'ouverture (12) des bras de serrage (13) appliquant une force radiale, par le biais desquels il se serre dans l'ouverture (12), ou
- **que** l'élément métallique (8) présente des bras d'encliquetage (14) par le biais desquels il est encliqueté dans l'ouverture (12).

5. Dispositif de capteur de niveau d'eau selon l'une quelconque des revendications précédentes,
**caractérisé en ce**
**que** l'élément métallique (8) présente un collet (15) par le biais duquel il repose dans l'état monté contre le capteur de niveau d'eau (4) et/ou contre la carte de circuit imprimé (6).

6. Dispositif de capteur de niveau d'eau selon l'une quelconque des revendications précédentes,
**caractérisé en ce**
**que** la matière plastique électroconductrice (7) est un thermoplaste renforcé de fibres de carbone, en particulier avec au moins 8 % en poids, de préférence environ 40 % en poids de fibres de carbone.

7. Dispositif de capteur de niveau d'eau selon l'une quelconque des revendications précédentes,
**caractérisé en ce**
**que** la matière plastique électroconductrice (7) présente des fibres de verre en tant qu'éléments de renforcement.

8. Dispositif de capteur de niveau d'eau selon l'une quelconque des revendications précédentes,
**caractérisé en ce**
- **que** la matière plastique (7) électroconductrice est un PA66 GF22 CF8 et du polyamide 66 avec 22 % en poids de fibres de verre et 8 % en poids de fibres de carbone, ou
- **que** la matière plastique électroconductrice (7) est un PA66 CF40 et du polyamide 66 avec 40 % en poids de fibres de carbone.

9. Filtre à carburant (1) avec un dispositif de capteur de niveau d'eau (5) selon l'une quelconque des revendications précédentes.
